(19) Europäisches Patentamt
European Patent Office
Office européen des brevets

(11) **EP 3 975 103 A1**

(12) **DEMANDE DE BREVET EUROPEEN**

(43) Date de publication:
**30.03.2022 Bulletin 2022/13**

(21) Numéro de dépôt: **21197843.2**

(22) Date de dépôt: **20.09.2021**

(51) Classification Internationale des Brevets (IPC):
**G06Q 50/06** (2012.01)    **H02J 3/00** (2006.01)
**H02J 3/14** (2006.01)    **H02J 3/28** (2006.01)
**H02J 13/00** (2006.01)

(52) Classification Coopérative des Brevets (CPC):
**G06Q 50/06; H02J 3/00; H02J 3/003; H02J 3/14; H02J 3/28; H02J 13/00**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.09.2020 FR 2009667**

(71) Demandeur: **Beoga**
**34960 Montpellier (FR)**

(72) Inventeurs:
• **PACHURKA, Amaury**
**30740 LE CAILAR (FR)**
• **LAMATY, Sylvia**
**34000 MONTPELLIER (FR)**
• **CHANDSAWANGBHUVANA, Chatchai "Steve"**
**IRVINE, CA, 92620-2711 (US)**
• **DOOLEY, Gareth**
**2900 HELLERUP (DK)**

(74) Mandataire: **Rhein, Alain**
**Cabinet BREV & SUD**
**55 Avenue Clément Ader**
**34170 Castelnau-le-Lez (FR)**

(54) **PROCÉDÉ ET SYSTÈME DE GESTION DE RESSOURCES D'ÉNERGIE ÉLECTRIQUE AU SEIN DE RÉSEAU DE DISTRIBUTION D'ÉNERGIE ÉLECTRIQUE**

(57)      L'invention concerne un procédé de gestion des ressources d'énergie électrique au sein d'un réseau de distribution électrique qui est géré par au moins un gestionnaire réseau, le procédé comprenant :

a) une étape de mesure à un instant T, d'une part, de flux d'énergie électrique transitant par un compteur électrique et/ou les équipements connectés au système d'au moins un utilisateur,

b) une étape de qualification d'un statut de l'utilisateur à un instant T, l'utilisateur étant défini en tant qu'utilisateur créditeur ou en tant qu'utilisateur débiteur ;

c) une étape de transmission de données mesurées à un instant T vers une plateforme distante,

d) une étape de mise en relation d'au moins un utilisateur créditeur avec au moins un utilisateur débiteur et/ou le gestionnaire du réseau,

e) une étape de détermination d'au moins une modulation pour au moins un utilisateur, la modulation vise à moduler la disponibilité de l'énergie sur l'ensemble du réseau au travers de transaction énergétique ,

f) une étape de modulation au niveau de l'installation d'au moins un utilisateur.

L'invention porte également sur un système pour la mise en œuvre du procédé.

[Fig. 1]

EP 3 975 103 A1

**Description**

[La présente invention entre dans le domaine de la gestion de flux d'énergie électrique au sein d'un réseau de distribution électrique. Plus précisément, la présente invention assure la gestion de flux d'énergie électrique au sein d'une communauté d'utilisateurs connectés à un même réseau de distribution d'énergie électrique.

Pour commencer, il convient de présenter les différents acteurs au sein d'un réseau d'énergie électrique. En premier lieu, un réseau d'énergies électriques est constitué d'infrastructures qui ont pour fonction d'alimenter, en énergie électrique, des utilisateurs du réseau. Les utilisateurs d'un réseau d'énergie électrique sont branchés à ce réseau via un compteur électrique qui permet de mesurer leur consommation d'énergie électrique.

Par ailleurs, la production d'énergie électrique est assurée par un ou plusieurs gestionnaires de production qui alimente(nt) le réseau d'énergie électrique.

Le transport de l'énergie électrique sur le réseau est assuré par un gestionnaire de transport au travers de lignes à haute et à très haute tension en amont de la distribution. Le réseau de basse tension est opéré par un gestionnaire de distribution. Le gestionnaire de distribution est chargé de l'entretien, du fonctionnement et du développement du réseau de distribution d'énergie électrique. Ces infrastructures sont utilisées par les gestionnaires de production et les gestionnaires d'approvisionnement pour amener l'électricité jusqu'à l'utilisateur final. Le gestionnaire de distribution met à disposition les compteurs qui relèvent la consommation auprès de chaque point de livraison. Il peut opérer les relevés des compteurs et dresse l'état des consommations à destination des gestionnaires d'approvisionnement pour leur permettre une facturation de l'énergie électrique auprès de l'utilisateur final en fonction de son tarif en vigueur.

Le gestionnaire d'approvisionnement, interlocuteur direct de l'utilisateur final commercialise l'électricité via le réseau opéré par le gestionnaire de distribution.

Le gestionnaire d'agrégation est un autre acteur d'un réseau électrique. Le gestionnaire d'agrégation suit en temps réel les consommations en électricité des utilisateurs du réseau et les besoins des gestionnaires de réseaux. Le gestionnaire d'agrégation est l'intermédiaire entre le producteur d'électricité et le marché de l'électricité. C'est lui qui, après avoir acheté la production d'énergie électrique d'une installation partenaire, la revend soit directement à des clients soit à la bourse de l'électricité.

Finalement, en parallèle, un gestionnaire d'équilibre assure en temps réel l'équilibre entre la production et la consommation d'électricité sur le réseau de distribution d'énergie électrique. Le gestionnaire d'équilibre est un opérateur qui s'est engagé contractuellement auprès du gestionnaire de transport à financer le coût des écarts constatés a posteriori entre l'électricité injectée et l'électricité consommée au sein d'un périmètre d'équilibre.

Il est à noter qu'une même entité peut exercer plusieurs rôles au sein d'un réseau d'énergie électrique.

Depuis, la fin des années 1990 et le début des années 2000, sont apparus de nouveaux types d'utilisateurs. La démocratisation des équipements de production d'énergie renouvelable a vu l'émergence de nouveaux utilisateurs qui possèdent des capacités de production électrique tels que des panneaux solaires photovoltaïques ou thermiques, des éoliennes etc. Cette énergie électrique produite localement par un utilisateur du réseau de distribution peut être utilisée pour subvenir au besoin en énergie électrique de cet utilisateur, ou peut être réinjectée dans le réseau de distribution électrique. En général, l'énergie électrique produite par utilisateur du réseau est réinjectée dans le réseau lorsque la production d'énergie électrique est supérieure à la consommation d'énergie électrique de cet utilisateur. Dans cette situation, l'utilisateur peut être considéré comme un utilisateur créditeur d'énergie électrique. Les utilisateurs créditeurs peuvent être des particuliers, des professionnels, des entreprises, des associations ou encore des collectivités locales.

Ces utilisateurs créditeurs peuvent avoir souscrit un contrat de revente de tout ou partie (revente totale ou surplus) de l'énergie électrique qu'ils produisent auprès d'un gestionnaire d'approvisionnement de ce réseau. Avec plus de vingt ans de recul, des problématiques subsistent en ce qui concerne la traçabilité de cette énergie électrique injectée par un utilisateur créditeur qui n'est pas fiable, la rémunération de l'utilisateur créditeur est fixée à l'avance souvent à l'avantage d'un gestionnaire, ou encore la gestion de l'équilibre du réseau de distribution au regard de ces apports d'énergie renouvelable par intermittence.

En effet, lorsqu'un utilisateur créditeur injecte de l'énergie électrique dans le réseau, cet apport en énergie électrique n'est pris en compte, en temps réel, ni par le gestionnaire de distribution, ni par le gestionnaire d'approvisionnement. En complément des apports des utilisateurs créditeurs, le gestionnaire d'approvisionnement délivre la quantité d'énergie nécessaire pour satisfaire à la demande des utilisateurs du réseau. Au final, le flux d'énergie disponible sur le réseau peut s'avérer à certain moment supérieur aux besoins des utilisateurs obligeant à des opérations de régulation. Ceci conduit à une mauvaise utilisation des moyens de production qui est fort dommageable à l'heure où les politiques du XXIème siècle tendent aux économies d'énergie et à l'optimisation des ressources énergétiques. En outre, l'énergie électrique apportée au réseau par l'utilisateur créditeur échappe à la loi de l'offre et la demande. L'énergie produite par l'utilisateur créditeur n'est pas valorisée en fonction de l'énergie électrique disponible sur le réseau (offre) et du besoin des utilisateurs du réseau (demande).

Pour répondre à ces problématiques, la demanderesse a développé une solution technique qui permet de monitorer mais aussi de moduler, en temps réel, les flux d'énergie électrique à tous niveaux du réseau de distribution : auprès de chaque utilisateur du réseau de distribution, et sur le réseau de distribution.

A cet effet, un premier aspect de l'invention concerne un procédé de gestion des ressources d'énergie électrique au sein d'un réseau de distribution électrique qui est géré par au moins un gestionnaire réseau. Selon l'invention le procédé se caractérise en ce qu'il comprend :

a) une étape de mesure à un instant T, d'une part, du flux d'énergie électrique transitant par un compteur électrique d'une installation électrique d'au moins un utilisateur, le compteur électrique étant connecté au réseau de distribution électrique et à l'installation électrique de l'utilisateur, et d'autre part, de données d'énergie électrique de consommation $E_c$ de l'installation électrique de l'utilisateur, de données d'énergie électrique stockée $E_s$ au sein de l'installation électrique de l'utilisateur, et de données d'énergie électrique produite $E_p$ par au moins un équipement de production de l'installation électrique de l'utilisateur, ;

b) une étape de qualification d'un statut de l'utilisateur à un instant T, lorsque le flux d'énergie électrique transitant par le compteur électrique est supérieur à 0, l'utilisateur injecte de l'énergie électrique sur le réseau de distribution, l'utilisateur est alors défini en tant qu'utilisateur créditeur, à l'inverse, lorsque le flux d'énergie électrique transitant par le compteur électrique est inférieur à 0, l'utilisateur soutire de l'énergie électrique depuis le réseau de distribution, l'utilisateur est alors défini en tant qu'utilisateur débiteur;

c) une étape de transmission de données mesurées à un instant T vers une plateforme distante, des données mesurées à instant T d'au moins un utilisateur créditeur et/ou des données mesurées à un instant T d'au moins un utilisateur débiteur étant transmises vers la plateforme distante au travers d'un réseau de télécommunication, les données mesurées sont enregistrées au sein de la plateforme distante ;

d) une étape de mise en relation d'au moins un utilisateur créditeur avec au moins un utilisateur débiteur et/ou le gestionnaire du réseau, l'étape de mise en relation étant opérée au sein de la plateforme distante ;

e) une étape de détermination d'au moins une modulation pour au moins un utilisateur créditeur et/ou d'au moins un utilisateur débiteur, une modulation visant à moduler la consommation d'énergie électrique d'une installation d'au moins un utilisateur et/ou du réseau de distribution, cette modulation étant déterminée par la plateforme distante, d'une part, en fonction des données de production d'énergie électrique $E_p$ de chaque utilisateur, des données de consommation d'énergie électrique $E_c$ de chaque utilisateur, des données de stockage $E_s$ d'énergie électrique de chaque utilisateur, et d'autre part, en fonction d'au moins un paramètre prédéterminé de répartition des énergies électriques disponibles à l'instant T ;

f) une étape de modulation de la consommation d'au moins un utilisateur créditeur et/ou d'au moins un utilisateur débiteur, l'étape de modulation étant opérée au niveau de l'installation d'un utilisateur, la modulation correspondant à une commande de baisse de la consommation d'énergie électrique de l'installation d'au moins un utilisateur, à un stockage d'énergie électrique issue de la production d'énergie électrique $E_{ps}$ de l'installation d'au moins un utilisateur, à une commande de stockage d'énergie électrique $E_{gs}$ issue du réseau de distribution, à une commande d'injection de l'énergie électrique stockée $E_{si}$ au sein de l'installation d'au moins un utilisateur vers le réseau distribution, à une commande d'injection de l'énergie électrique produite $E_{pi}$ par l'installation d'au moins un utilisateur vers le réseau de distribution, ou à une commande d'une combinaison de plusieurs de ces modulations pour un ou plusieurs utilisateurs, la plateforme distante pilotant des modulations pour tous les utilisateurs.

Le procédé de gestion des ressources d'énergie électrique selon l'invention permet de faire remonter en temps réel les données de consommations, de production et de stockage d'énergie électrique de chaque utilisateur du réseau de distribution électrique. Chaque utilisateur est affilié à une communauté d'utilisateurs qui sont mis en relation par une plateforme distante. Ainsi, le procédé selon l'invention opère une agrégation des données de chaque utilisateur au niveau de la plateforme ce qui favorise une optimisation des ressources énergétiques en temps réel à deux niveaux : auprès de l'installation électrique de chaque utilisateur mais aussi plus globalement sur le réseau de distribution lui-même et de fait au sein de la communauté d'utilisateurs.

Selon une première caractéristique de l'invention, lorsque la plateforme distante pilote une modulation d'injection de l'énergie électrique stockée $E_{si}$ au sein de l'installation pour au moins un utilisateur créditeur vers le réseau distribution, ou une injection de l'énergie électrique produite $E_{pi}$ par l'installation vers le réseau de distribution, le procédé comporte

g) une étape de détermination d'au moins un destinataire d'un flux d'énergie électrique provenant d'au moins un utilisateur créditeur, le au moins un destinataire étant un utilisateur débiteur et/ou un gestionnaire du réseau de distribution d'énergie électrique, l'étape de détermination est réalisée sur la plateforme distante en fonction d'au moins un paramètre prédéterminé de répartition de l'énergie électrique ;

h) une étape de transfert d'un flux d'énergie électrique, via le réseau de distribution électrique, depuis au moins un utilisateur créditeur vers au moins un destinataire déterminé, le flux d'énergie électrique transféré étant quantifié au moins par le compteur électrique de le au moins un utilisateur créditeur.

Avantageusement, le procédé selon l'invention garantie une traçabilité en temps réel des transactions d'énergie électrique entre deux utilisateurs ou entre un utilisateur créditeur et un gestionnaire du réseau de distribution. La traçabilité en temps réel s'applique également aux opérations de modulation qui sont opérées auprès d'un utilisateur. Au travers des étapes de transfert d'énergie électrique et de modulation le procédé permet d'optimiser la répartition de l'énergie électrique disponible sur le réseau à un instant T.

En particulier, lors de l'étape de transfert, le flux d'énergie électrique est quantifié par une mesure de tension et de volume par unité de temps du flux d'énergie électrique transitant au niveau d'un compteur électrique d'au moins un utilisateur créditeur et/ou au niveau d'un compteur d'un utilisateur débiteur. Ces mesures assurent une traçabilité précise et fiable des transactions d'énergie électrique.

De préférence, lors de l'étape h) le flux d'énergie électrique est quantifié par :

- une mesure de flux d'énergie électrique sortant au niveau du compteur électrique d'au moins un utilisateur créditeur, et/ou
- une mesure de flux d'énergie électrique entrant au niveau du compteur électrique de l'utilisateur débiteur.

Il est ainsi possible de tracer précisément une transaction énergétique de pair à pair entre deux utilisateurs.

Selon l'invention, la plateforme distante fonctionne de façon autonome et détermine en temps réel, en fonction d'au moins un paramètre déterminé, le destinataire d'un flux d'énergie électrique fournit par au moins un utilisateur créditeur, le paramètre déterminé étant défini par l'utilisateur débiteur et/ou par le gestionnaire réseau.

Selon une deuxième caractéristique du procédé de gestion selon l'invention, les étapes a), b), c), f) et h) sont opérées par un module de communication qui est connecté :

- à des équipements de production et/ou de stockage d'énergie électrique, et/ou
- à des équipements de consommation électrique,
- au compteur électrique d'un utilisateur, et
- à la plateforme distante au travers d'un réseau de télécommunication.

Le module de communication constitue une passerelle de communication entre la plateforme distante et l'installation électrique d'un utilisateur. D'une part, le module de communication collectant, stockant et traitant en local, d'une part, les données de flux d'énergie électrique transitant par le compteur électrique, et d'autre part, des données de production d'énergie électrique $E_p$ des équipements de production, des données de stockage d'énergie électrique $E_s$ des équipements accumulateurs d'énergie électrique, et des données de consommation $E_c$ d'énergie électrique des équipements de consommation de l'installation électrique d'un utilisateur.

D'autre part, la plateforme distante transmet des commandes de modulations via le module de communication, à l'installation électrique d'un utilisateur. A ce titre, l'étape de modulation peut aussi piloter, au travers du module de communication, le taux de fonctionnement ou l'extinction des équipements de consommation qui sont reliés au module de communication en vue de réduire la consommation d'énergie électrique de l'utilisateur.

Selon une troisième caractéristique du procédé selon l'invention, les étapes a), b) et c) sont répétées en continu de sorte à transmettre en temps réel à la plateforme distante les données mesurées de chaque utilisateur.

Selon une quatrième caractéristique du procédé de gestion selon l'invention, la plateforme distante est paramétrable pour déterminer une modulation pour au moins un utilisateur débiteur et/ou pour au moins un utilisateur créditeur, la plateforme distante étant paramétrable selon au moins un paramètre qui peut être choisi parmi la liste suivante :

- prix de l'énergie électrique,

- proximité géographique de provenance de l'énergie électrique, les données de localisation de chaque utilisateur étant transmises à la plateforme distante,

- type de production électrique de l'énergie électrique tel qu'une production d'énergie éolienne, photovoltaïque ou hydraulique,

- disponibilité instantanée de l'énergie électrique d'un utilisateur créditeur pour équilibrer le réseau de distribution,

- déplacement de l'énergie électrique stockée dans un équipement accumulateur d'énergie électrique vers un équipement de consommation,

- stockage de l'énergie électrique dans un équipement accumulateur d'un utilisateur créditeur lorsque l'énergie électrique est produite en grande quantité à un instant T,

- nature et/ou l'état d'un équipement accumulateur d'énergie électrique ,

- disponibilité d'une capacité de modulation instantanée d'un utilisateur débiteur ou d'un utilisateur créditeur pour équilibrer le réseau de distribution,

et/ou une association d'au moins deux de ces paramètres.

Selon une cinquième caractéristique, le procédé de gestion selon l'invention comporte une étape de transmission, au travers d'un réseau de communication, des données de transfert de flux d'énergie électrique depuis la plateforme distante vers le gestionnaire réseau, ceci en vue d'opérer une transaction financière.

Selon une sixième caractéristique du procédé de gestion selon l'invention, les données mesurées pour chaque utilisateur sont classifiées et répertoriées chronologiquement en vue de créer un historique des données mesurées pour chaque utilisateur. Dans ce contexte, le procédé selon l'invention peut comporter une étape de prévision i) à un instant T+n des données mesurées et du statut de chaque utilisateur, cette étape est opérée en fonction d'au moins un paramètre environnemental et de l'historique de mesurées de chaque utilisateur.

Dès lors, en fonction de l'étape de prévision i), le procédé peut comprendre les opérations suivantes :

- déterminer une disponibilité future de l'énergie électrique d'un utilisateur créditeur pour équilibrer le réseau de distribution, la disponibilité future étant un paramètre de détermination du destinataire d'un flux d'énergie électrique, et/ou
- planifier une étape de modulation de la consommation d'un utilisateur pour équilibrer le réseaux de distribution.

L'invention concerne également un système de gestion de ressources d'énergie électrique au sein d'un réseau de distribution électrique. Ce système met en oeuvre le procédé défini selon l'invention, en particulier, ce système comprenant :

- au moins un gestionnaire réseau qui assure les transferts de flux d'énergie électrique au sein du réseau de distribution,
- une communauté d'utilisateurs qui sont connectés, au travers d'un compteur électrique individuel, à un même réseau de distribution électrique, chaque utilisateur comprenant une installation électrique, le compteur électrique mesurant les flux d'énergie électrique qui transitent entre le réseau de distribution électrique et l'installation électrique de l'utilisateur,
- une plateforme distante qui assure, d'une part, une mise en relation des utilisateurs entre eux et/ou des utilisateurs avec le gestionnaire réseau via des interfaces dédiés, d'autre part, des opérations de transfert de flux d'énergie entre au moins un utilisateur et le gestionnaire réseau et/ou entre au moins deux utilisateurs et qui assure les opérations de modulation en vue de répondre à une demande faite par le gestionnaire de réseau pour une optimisation de celui-ci ou une demande faite par la communauté d'utilisateurs pour une optimisation de l'énergie disponible pour celle-ci,
- un module de communication qui équipe chaque utilisateur, le module de communication étant connecté, au compteur électrique d'un utilisateur, à la plateforme distante au travers d'un réseau de télécommunication, et à au moins un équipement producteur et/ou à un équipement accumulateur d'énergie électrique mais aussi à au moins un équipement de consommation.

Il est à noter que le système met en oeuvre le procédé, il possède par conséquent les mêmes avantages que le procédé pour la gestion des ressources d'énergie électrique au sein d'un réseau de distribution électrique.

D'autres particularités et avantages apparaitront dans la description détaillée qui suit, d'un exemple de réalisation, non limitatif, de l'invention illustré par les figures 1 à 3 placées en annexe et dans lesquelles :

[Fig. 1] est une représentation schématique d'un système de transfert de flux des données d'énergie électrique conforme de l'invention ;

[Fig. 2] est une représentation d'une installation d'un utilisateur comprenant un module de communication selon l'invention.

[Fig. 3] est une représentation schématique de la succession d'étape opérée par le procédé selon l'invention.

[Fig. 4] est une représentation schématique des flux d'énergies possibles d'énergie électrique au sein d'une installation d'un utilisateur membre d'une communauté d'utilisateurs du procédé selon l'invention.

L'invention concerne un procédé de gestion de ressource d'énergie électrique au sein d'un réseau de distribution 1 d'énergie électrique. En particulier, le procédé de gestion de ressources s'applique à l'énergie électrique du réseau de distribution électrique. Selon les normes de l'Union Européenne, le domaine de la basse tension est compris entre 50 et 1 000 volts en régime de tension alternative et 120 et 1 500 volts en régime de tension continue. Le procédé selon l'invention permet de réaliser des transactions d'énergie électrique.

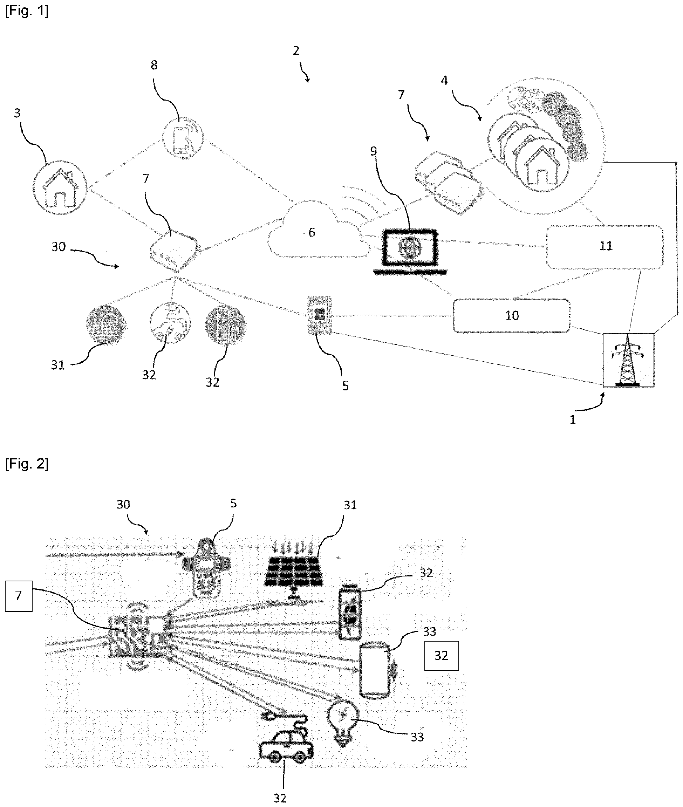

Comme illustré à la figure 1, l'invention se rapporte également à un système de de gestion d'énergie électrique au sein d'un réseau de distribution 1 d'énergie électrique. Comme nous l'avons évoqué dans la première partie de ce document, un réseau de distribution 1 est géré par plusieurs gestionnaires qui ont des attributions spécifiques. Pour simplifier la figure 1, seul un gestionnaire d'agrégation 10 et un gestionnaire d'équilibre 11 sont représentés. Dans la suite de ce document, la dénomination « gestionnaire réseau 10, 11 » se rapporte en particulier à un gestionnaire d'agrégation 10 et un gestionnaire d'équilibre 11.

En ce sens, selon l'invention, le système 2 selon l'invention comprend ainsi au moins un gestionnaire réseau 10, 11 qui suit en temps réel les consommations en électricité des utilisateurs 3 du réseau électrique (agrégateur) et/ou assure en temps réel l'équilibre entre la production et la consommation d'électricité sur le réseau de distribution 1 d'énergie électrique (gestionnaire d'équilibre). Le système 2 comprend en outre une communauté 4 d'utilisateurs 3 qui sont connectés à ce réseau de distribution 1 d'énergie électrique. En particulier, chaque utilisateur 3 est connecté à un même réseau de distribution 1 au travers d'un compteur électrique 5 individuel. De préférence, le compteur électrique 5 est un compteur communicant, il comporte un émetteur récepteur configuré pour communiquer au travers d'un réseau de télécommunication filaire, sans fil. Dans le cas d'une communication filaire, le compteur électrique 5 utilise un émetteur/récepteur configuré pour transmettre des données ou selon une technologie de courant porteur. Dans le cas d'une communication sans fil, le compteur électrique 5 peut communiquer à distance par exemple via un réseau mobile de type GSM, 2G, 3G, 4G, 5G, ou selon un réseau sans fil de type WIFI ou LORA. La technologie de communication est choisie en fonction des équipements et de la situation géographique du local de chaque utilisateur 3.

Selon l'invention, chaque utilisateur 3 comporte une installation électrique 30. Dans ce contexte, le compteur électrique 5 mesure les flux d'énergie électrique qui transitent entre le réseau de distribution 1 électrique et l'installation électrique 30 de l'utilisateur 3.

Comme illustrée à la figure 2, l'installation électrique 30 d'un utilisateur 3 peut comporter des équipements de production 31 d'énergie électrique tels que des panneaux photovoltaïques, des panneaux solaires hybrides photovoltaïques, des dispositifs éoliens voire hydroliens ou tout autre moyen de production d'énergies électriques renouvelables. De la même façon, l'installation électrique 30 peut comporter des équipements accumulateurs 32 d'énergie électrique. Parmi ces équipements 32, il est possible de distinguer des équipements accumulateurs 32 d'énergie statiques tels qu'une batterie de stockage, d'un chauffe-eau ou autre dispositif de stockage de l'énergie, et des équipements accumulateurs 32 d'énergie électrique mobiles tels que la batterie d'un véhicule électrique de type voiture, deux roues etc.

Comme illustré à la figure 1, le système selon l'invention comprend une plateforme distante 6. Dans cet exemple, la plateforme distante 6 comprend une interface de mise en relation stockée et exécutée par serveur distant. La plateforme distante 6 est reliée à chaque utilisateur 3 au travers d'un réseau de télécommunication tel qu'internet ou un réseau mobile configuré pour transmettre des données à distance. A ce titre, il est possible de citer les réseaux mobiles 3G, 4G voir 5G. Le ou les gestionnaire(s) réseau(x) 10, 11 est/sont également relié(s) à la plateforme distante 6 au travers d'un réseau de télécommunication mobile ou internet.

Dans un premier temps, la plateforme distante 6 assure une mise en relation des utilisateurs 3 entre eux et/ou des utilisateurs 3 avec un gestionnaire réseau 10, 11. La plateforme distante 6 est configurée pour piloter des modulations de consommation d'énergie électrique du réseau de distribution 1 en répartissant l'énergie électrique disponible dans l'ensemble de la communauté 4 auprès de chaque utilisateur 3. La plateforme distante 6 est également configurée pour piloter des modulations de la consommation de chaque utilisateur 3.

Dans un second temps, la plateforme distante 6 est un espace de transaction de flux d'énergie électrique entre au moins un utilisateur 3 et un gestionnaire réseau 10, 11. Néanmoins, la plateforme distante 6 permet aussi des transactions directes de flux d'énergie électrique entre au moins deux utilisateurs 3 du réseau de distribution 1. Par transaction énergétique directe, on entend une transaction énergétique de pair à pair entre deux utilisateurs 3 au travers de la plateforme distante 6.

Dans l'exemple des figures 1 et 2, le système comprend un module de communication 7 qui équipe chaque utilisateur 3 du réseau de distribution 1. Le module de communication 7 comprend un processeur et une mémoire configurés pour stocker et exécuter un ou plusieurs algorithme(s). Le module de communication 7 comprend en outre des moyens de communication filaire et/ou sans fil. A titre indicatif, les moyens de communication sans fil peuvent comporter un émetteur/récepteur de champ proche tel qu'un émetteur bluetooth, radio, WIFI etc. Ces moyens de communication permettent au module de communication 7 de communiquer avec des équipements électriques producteurs 31 et/ou accumulateurs 32 d'énergie électrique : des batteries stationnaires, onduleurs, bornes de charge pour véhicules électriques, batteries de véhicule électrique. En sus, le module de communication peut être relié à des équipements de consommation 33 qui consomment de l'énergie électrique tel un chauffage, un chauffe-eau, un appareil électroménager, une pompe etc. En somme, le module de communication 7 est connecté à tout équipement électrique qui comporte des moyens de communication compatibles avec ceux du module de communication 7.

Le module de communication 7 est piloté par un logiciel embarqué ou « firmware » mais aussi par un algorithme qui contrôle une collecte de données à un intervalle régulier ou variable de tous les équipements électriques 31, 32, 33 connectés au module de communication 7.

De surcroît, le module de communication 7 est également connecté au compteur électrique 5 de l'utilisateur 3. Selon l'invention, la communication entre le module de communication 7 et le compteur électrique 5 se fait au travers d'une interface de communication telle que l'interface de communication « TIC » qui signifie Télé-Information-Client, ou une autre interface équivalente. Le module de communication 7 peut ainsi collecter instantanément les données de transfert de flux d'énergie électrique transitant par le compteur électrique 5. Le module de communication 7 peut également enregistrer, via sa mémoire, les données de flux d'énergie électrique en local. Ainsi, le module de communication 7 peut enregistrer une durée d'une transaction d'énergie électrique au travers d'une mesure de volume en Watt/heure (Wh) et d'une mesure de tension en voltampère (VA). Selon l'invention, le module de communication 7 contribue à tracer en temps réel les flux d'énergie électrique transitant au niveau du compteur électrique 5 de chaque utilisateur 3.

Dans cet exemple, le module de communication 7 est aussi connecté à la plateforme distante 6 au travers d'un réseau de télécommunication tel qu'un réseau sans fil et/ou via internet.

En ce sens, le module de communication 7 est configuré pour transmettre les données collectées auprès du compteur électrique 5 et des différents équipements électriques 31, 32, 33 de l'installation électrique 30 de chaque utilisateur 3. En particulier, les moyens de communication peuvent comprendre un modem cellulaire communiquant avec la plateforme distante 6. A titre d'indication, le modem cellulaire peut utiliser un protocole de communication spécifique tel que les protocoles NBIoT, CoAP, MQTT, LTE ou LWM2M.

Le module de communication 7 est alimenté en énergie via une prise secteur classique. Néanmoins, le module de communication 7 peut avantageusement comprendre une batterie. La batterie contribue à la conservation les données collectées dans la mémoire du module de communication 7 lors d'une coupure d'électricité. En effet, la mémoire interne et une batterie pallient une éventuelle perte de données. Dans ce cas, l'algorithme du module de communication 7 est conçu pour opérer une mise en paquet des données collectées pendant la coupure d'électricité avant de les transmettre vers la plateforme distante 6.

Avantageusement, le module de communication intègre des moyens de géolocalisation. Les moyens de géolocalisation peuvent être type satellite tel qu'un émetteur/récepteur GPS, GNSS, GALILEO etc. Les moyens de géolocalisation peuvent également être formés par un système de triangulation GSM/2G/3G/4G/5G, par WIFI ou par référencement géographique.

La communauté 4 est constituée par des utilisateurs 3 du réseau de distribution 1 d'énergie électrique qui sont équipés d'un module de communication 7. Un utilisateur 3, membre de la communauté 4, peut être équipé d'équipement de production électrique 31 et/ou d'équipement accumulateur 32 d'énergie électrique. Alternativement, l'utilisateur 3 membre de la communauté 4, peut ne pas disposer de ces équipements, le procédé selon l'invention ne pourra alors influencer que sur sa consommation d'énergie électrique $E_c$. Chaque utilisateur 3, membre de la communauté 4, possède également un droit d'accès et un compte virtuel à la plateforme 6.

Afin d'accéder à la plateforme 6, le système 2 selon l'invention peut également comprendre une interface utilisateur 8 consultable en ligne ou via une application dédiée depuis un terminal numérique connecté à internet tel qu'un smartphone, une tablette, un ordinateur etc (illustré à la figure 1). L'interface 8 communique avec la plateforme distante 6. En ce sens, l'interface utilisateur 8 permet à chaque utilisateur 3 d'interagir avec d'autres utilisateurs 3 de la communauté 4 et/ou un gestionnaire réseau 10, 11 au travers de la plateforme distante 6.

L'interface utilisateur 8 qui permet aux utilisateurs 3 de concrétiser une transaction de transfert énergétique, de suivre ses données de consommation et production, de connaître les énergies disponibles au sein de son installation 30 et de la communauté 4 d'utilisateurs 3. L'interface utilisateur 8 comporte également des fonctionnalités de pilotage des flux énergétiques de l'installation 30 d'un utilisateur 3. L'interface utilisateur 8 répertorie également l'état des équipements 31, 32, 33 connectés au module de communication 7. En pratique, l'interface utilisateur 8 comporte un système de messagerie qui permet de recevoir des notifications sur l'offre et la demande d'énergie de la communauté 4 ou du gestionnaire de réseau 10, 11. Le gestionnaire 10, 11 peut également soumettre des offres pour subvenir à ses besoins de modulation du réseau de distribution 1.

La plateforme 6 comporte également une interface gestionnaire 9. L'interface gestionnaire 9 est dédiée à un gestionnaire réseau 10, 11. L'interface gestionnaire 9 est configurée pour monitorer les flux d'énergie électrique des utilisateurs 3 affiliés dans la communauté 4. A cet effet, l'interface gestionnaire 9 classifie par utilisateur 3, les données transmises par le module de communication 7 de chaque utilisateur 3. L'interface gestionnaire 9 permet de déterminer les futurs besoins de consommation du réseau de distribution 1 mais aussi de chaque utilisateur 3. Pour cela, l'interface gestionnaire 9 intègre des algorithmes qui s'appuient sur les historiques de consommation de chaque utilisateur 3. En parallèle, l'interface gestionnaire 9 est également configurée pour déterminer les productions d'énergie électrique futures des utilisateurs 3. Mais aussi l'énergie électrique qu'un utilisateur 3 est susceptible de stocker dans un équipement accumulateur 32. A cet effet, l'interface utilisateur 9 s'appuie sur des algorithmes de prédiction qui prennent en considération les données météorologiques et les données historiques de production et de stockage d'énergie électrique d'un utilisateur 3.

L'interface gestionnaire 9 permet de piloter les flux d'énergie électrique au sein du réseau de distribution 1 en tenant compte des productions et du stockage d'énergie électrique qui sont opérés au niveau de l'installation 30 de chaque utilisateur 3. En pratique, l'interface gestionnaire 9 comporte une boite de dialogue qui permet d'envoyer des notifications auprès de chaque utilisateur 3 en vue de solliciter des actions de modulation ou de consommation ou d'injection auprès des utilisateurs 3 de la communauté 4

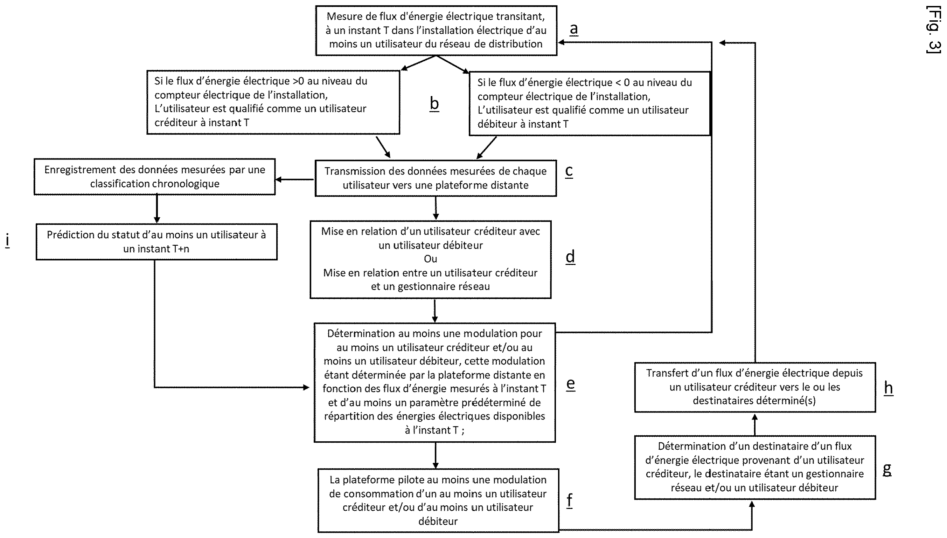

Comme illustré à la figure 3, le procédé de gestion de ressources d'énergie électrique selon l'invention comprend une étape de mesure qui est réalisée à un instant T. Cette étape est notée a). L'étape a) mesure à un instant T des flux d'énergie électrique transitant par un compteur électrique 5 de l'installation 30 électrique d'au moins un utilisateur 3. En parallèle, lors de cette étape, sont également mesurées ou collectées, des données d'énergie électrique de consommation $E_c$ de l'installation 30 électrique de l'utilisateur 3, de données d'énergie électrique stockée $E_s$ au sein de l'installation 30 électrique de l'utilisateur 3 et de données d'énergie électrique produite $E_p$ par au moins un équipement de production 31 de l'installation 30 de l'utilisateur 3.

Les données d'énergie électrique de consommation $E_c$ sont récoltées auprès des équipements électriques 33 de consommation. En parallèle les données d'énergie électrique stockée $E_s$ au sein l'installation électrique 30 de l'utilisateur 3, sont collectées auprès des équipements accumulateurs 32 d'énergie électrique.

. Comme nous l'avons décrit précédemment, le compteur électrique 5 est connecté, d'une part, au réseau de distribution électrique 1, et d'autre part, à l'installation électrique 30 de l'utilisateur 3. Le compteur électrique 5 permet ainsi de déterminer, en temps réel, la quantité d'énergie électrique injectée dans le réseau de distribution 1. Lorsque le flux d'énergie électrique transitant par le compteur électrique 5 est supérieur à 0, l'utilisateur 3 injecte de l'énergie électrique sur le réseau de distribution 1. Le compteur électrique 5 peut également déterminer la quantité d'énergie soutirée par l'utilisateur 3 au réseau de distribution. En effet, lorsque le flux d'énergie électrique, transitant par le compteur électrique 5, est inférieur à 0, l'utilisateur 3 soutire de l'énergie électrique depuis le réseau de distribution 1 pour chaque utilisateur 3 du réseau. Ici, le soutirage et l'injection d'énergie électrique sur le réseau de distribution 1 correspondent aux flux d'énergie électrique qui transitent au niveau de chaque compteur électrique 5.

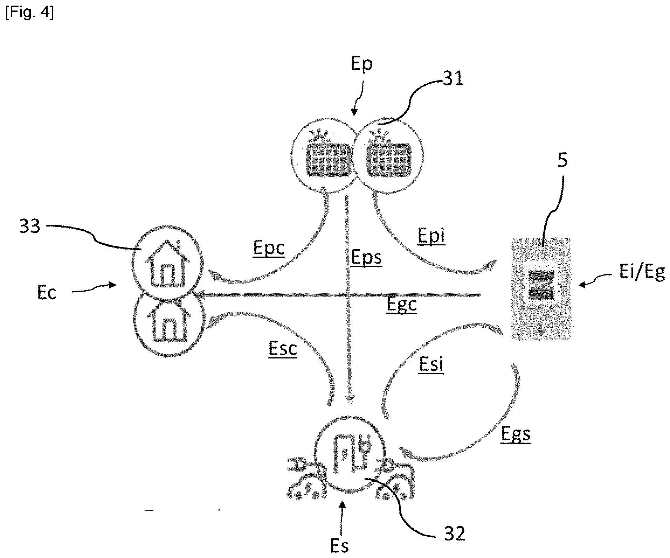

Le procédé de gestion selon l'invention, comprend aussi une étape de qualification d'un statut de l'utilisateur 3. Cette étape est notée b). Ceci est illustré à la figure 3, lorsque l'utilisateur 3 injecte de l'énergie électrique sur le réseau de distribution 1, le statut de l'utilisateur 3 est défini en tant qu'utilisateur créditeur. Alternativement, lorsque l'utilisateur 3 soutire de l'énergie électrique depuis le réseau de distribution 1, le statut de l'utilisateur 3 est défini en tant qu'utilisateur créditeur. Dans l'exemple de la figure 4, l'énergie électrique injectée sur le réseau électrique 1 est notée $E_i$, alors que l'énergie électrique soutirée du réseau électrique 1 est notée $E_g$.

Il est à noter que le transfert de flux d'énergie électrique peut être égal à zéro au niveau du compteur électrique 5 de l'installation 30 électrique. Dans ce cas, l'utilisateur 3 peut être en autoconsommation d'énergie électrique ou l'utilisateur peut stocker le surplus d'énergie qu'il produit. De fait, les données mesurées pour cet utilisateur 3 sont intégrées dans le procédé de gestion des ressources énergétique et peuvent être utilisées pour piloter une modulation.

Bien entendu, le statut d'un utilisateur 3 est déterminé en temps réel à un instant T. Par temps réel, on entend une action réalisée de l'ordre de la seconde. En particulier, le statut de l'utilisateur 3 est déterminé selon un intervalle de temps de 1 à 5 secondes ou encore selon un intervalle de temps de 2 à 4 secondes. En ce sens, un utilisateur 3 peut passer du statut d'utilisateur débiteur au statut d'utilisateur créditeur en fonction de l'évolution de sa consommation $E_c$ En effet, la consommation $E_c$ d'un utilisateur 3 varie tout au long d'une journée en fonction de l'utilisation des équipements de consommation 33. Le statut de l'utilisateur 3 peut aussi varier en fonction de l'évolution de sa production d'énergie électrique $E_p$. Il est notoire que les sources d'énergie renouvelable ne fournissent pas une production d'énergie électrique constante. La production d'énergie renouvelable est notamment liée aux conditions environnementales, de manière connue, le fonctionnement des panneaux solaires est lié à l'ensoleillement et celui des éoliennes à la présence de vent.

De plus, le statut de l'utilisateur peut être aussi lié à l'évolution de l'énergie électrique stockée $E_s$ dans les équipements accumulateurs 32 d'énergie électrique. A titre d'exemple, lorsqu'une batterie électrique d'une voiture est connectée à sa borne de rechargement et au moins partiellement chargée, cela constitue une réserve d'énergie électrique qu'il est possible, par exemple, d'injecter dans le réseau de distribution 1 via le compteur électrique 5 de l'utilisateur 3.

Dans cette situation l'utilisateur 3 consomme plus d'énergie électrique qu'il n'en produit, néanmoins, la batterie de sa voiture constitue une réserve d'énergie électrique $E_s$ qui peut être reversée dans le réseau de distribution 1. Ceci que ce soit à des fins de service au réseau de distribution 1, par exemple, pour répondre à un pic de consommation général sur ce réseau de distribution 1, ou bien pour un transfert de pair à pair vers un autre utilisateur 3.

Les données peuvent être collectées à intervalles variables définis en fonction du type de données et de son exploitation au sein du système 2. Par exemple, les données peuvent être collectées selon un intervalle de temps de 1 à 5 secondes ou un intervalle de temps de 2 à 4 secondes.

Il est à noter que les étapes a) et b) sont opérées par le module de communication 7. En pratique, le module de communication 7 collecte, stocke et traite localement les données de flux d'énergie électrique transitant par le compteur électrique 5. Ceci au travers d'une interface de communication tel que décrit précédemment. En complément, le module de communication 7 collecte, stocke et traite au moins trois types données supplémentaires les données de production $E_p$ d'énergie électrique des équipements de production 31, les données de stockage $E_s$ des équipements accumulateur 32 d'énergie électrique stockée, et les données de consommation $E_c$ des équipements consommation 33 d'énergie électrique.

Ainsi, le module de communication 7 qui collecte, stocke permettent de mettre en parallèle, d'une part, le flux d'énergie électrique transitant par le compteur électrique 5 d'un utilisateur 3, et d'autre part, l'impact de chaque équipement électrique 31, 32, 33 sur le flux d'énergie transitant par le compteur électrique 5. Par « impact de chaque équipement 31, 32, 33 », il faut comprendre : la consommation, la production, le stockage de chaque équipement électrique 31, 32, 33 auquel le module de communication 7 d'un utilisateur 3 est connecté.

Comme illustré à la figure 3, le procédé de gestion selon l'invention comprend une étape de transmission des données mesurées vers une plateforme distante 6. Cette étape est notée c). Au cours de l'étape c), des données mesurées d'au moins un utilisateur 3 créditeur et/ou des données mesurées d'au moins un utilisateur 3 débiteur sont transmises vers la plateforme distante 6. Les données mesurées sont transmises par le module de communication 7 au travers d'un réseau de télécommunication filaire ou sans fil tel que décrit précédemment. L'étape de transmission est réalisée en temps réel à un instant T.

Selon l'invention, les étapes a), b) et c) sont répétées en continu de sorte à transmettre en temps réel à la plateforme distante 6. Les données de flux d'énergie électrique au niveau du compte électrique 5 et le comportement des équipements électriques 31, 32, 33 de chaque utilisateur 3 peuvent être suivis en temps réel.

Les données mesurées de chaque utilisateur 3 sont classifiées chronologiquement au sein d'une base de données stockée sur le serveur distant et accessibles via l'interface de la plateforme. Ainsi, la plateforme distante 6 répertorie chronologiquement les données de production $E_p$, de stockage $E_s$ et de consommation $E_c$ de chaque utilisateur 3.

Il pourrait être envisageable que le module de communication 7 traite les données de chaque utilisateur 3 avant de les transmettre à la plateforme distante 6. En particulier, la qualification du statut de l'utilisateur 3 pourrait être effectuée au niveau du module de communication 7. Néanmoins, ceci impliquerait que le module de communication 7 soit équipé d'une puissance de calcul et de stockage adéquate.

Comme illustrée à la figure 3, une étape de mise en relation d'au moins un utilisateur créditeur avec au moins un utilisateur débiteur. Alternativement ou en complément, la mise en relation peut être opérée entre un utilisateur créditeur et le gestionnaire du réseau 10, 11. Cette étape de mise en relation est opérée au sein de la plateforme distante 6. Plus précisément, l'étape de mise en relation est effectuée via une interface de mise en relation stockée et exécutée par serveur distant. L'étape de mise en relation est notée d. L'étape de mise en relation de la communauté 4 d'utilisateurs 3 peut être automatisée ou à l'initiative d'un utilisateur 3 via l'interface utilisateur 8 dédiée de la plateforme distante 6. Dans cette configuration, l'étape de mise en relation peut être répété en continu selon un intervalle de temps déterminé. L'étape de mise en relation permet de mutualiser les données mesurées de chaque utilisateur 3 membre de la communauté 4 afin d'optimiser l'utilisation de l'énergie électrique disponible sur le réseau à un instant T. Cette mise en relation peut être faite au travers de l'interface utilisateur 8 pour les utilisateurs 3. Les gestionnaires réseau 10, 11 utilisent, quant à eux, l'interface gestionnaire 9. L'interface utilisateur 8 et l'interface gestionnaire 9 sont reliées entre elles.

A ces fins, le procédé selon l'invention comprend au moins une modulation pour au moins un utilisateur créditeur et/ou au moins un utilisateur débiteur. L'étape de détermination d'au moins une modulation est notée e). De manière générale, une modulation vise à moduler la consommation d'énergie électrique d'une installation 30 d'au moins un utilisateur 3 et/ou du réseau de distribution 1.

Selon l'invention, une modulation est déterminée par la plateforme distante 6. Pour cela, la plateforme distante 6 comporte un ou plusieurs algorithmes de répartition de l'énergie électrique disponible au sein de la communauté 4. Ce ou ces algorithmes sont stockés sur le serveur distant qui héberge la plateforme distante 6.

La plateforme 6 détermine une modulation en fonction des données de production d'énergie électrique $E_p$, des données de consommation d'énergie électrique $E_c$ et des données de stockage $E_s$ d'énergie électrique de chaque utilisateur 3. De plus, pour déterminer une modulation, la plateforme 6 utilise également au moins un paramètre prédéterminé de répartition des énergies électriques disponibles à l'instant T.

Le procédé comporte aussi une étape de modulation de la consommation d'au moins un utilisateur créditeur et/ou d'au moins un utilisateur débiteur. L'étape de modulation est notée f).

Selon l'invention, l'étape de modulation est opérée au niveau de l'installation 30 d'un ou de plusieurs utilisateurs 3. Ces utilisateurs sont de préférence membres de la communauté 4. Selon l'invention, une modulation est commandée depuis la plateforme 6 vers l'installation 30 d'un utilisateur 3 au travers du module de communication 7.

La modulation peut être une commande de baisse de la consommation d'énergie électrique de l'installation 30 d'au moins un utilisateur 3. Par exemple, dans ce cas, le module de communication 7 peut arrêter le fonctionnement d'un ou plusieurs équipements de consommation 33 d'énergie électrique.

Comme illustrée à la figure 4, la plateforme 6 peut également commander une modulation de stockage d'énergie électrique issue de la production d'énergie électrique $E_{ps}$ de l'installation 30 d'au moins un utilisateur 3. En pratique, la plateforme 6 ordonne au module de communication 7 de demander un stockage d'une quantité déterminée d'énergie électrique pendant une période déterminée. Le module de communication 7 pilote alors un ou plusieurs équipement accumulateur 32 en ce sens. Une telle modulation peut être commandée lorsque le réseau de distribution 1 est à l'équilibre et que les équipements de production 31 de l'installation 30 sont dans une période de forte production d'énergie électrique. Il est à noter qu'un réseau de distribution 1 d'énergie électrique est à l'équilibre lorsque le soutirage des utilisateurs 3 correspond à l'énergie électrique injectée par le gestionnaire d'approvisionnement et l'ensemble des utilisateurs créditeurs.

La modulation peut également correspondre à une commande de stockage d'énergie électrique $E_{gs}$ issue du réseau de distribution 1. En pratique, la plateforme 6 commande au module de communication 7 d'au moins un utilisateur 3, de soutirer de l'énergie électrique du réseau de distribution 1 pour le stocker dans le ou les équipements accumulateurs 32 de l'installation de l'utilisateur 3. Une telle modulation peut intervenir lorsque l'énergie électrique disponible sur le réseau de distribution 1 est supérieure au soutirage des utilisateurs 3.

Comme illustrée à la figure 4, une modulation peut également concerner une commande d'injection de l'énergie électrique stockée $E_{si}$ au sein de l'installation 30 d'au moins un utilisateur 3 vers le réseau distribution 1. Dans cette situation, la plateforme 6 commande au module de communication 7 d'au moins un utilisateur 3, d'injecter de l'énergie électrique $E_{si}$, issue du ou des équipements accumulateur 32 de l'installation de l'utilisateur 3, dans le réseau de distribution 1. Cette modulation permet par exemple d'équilibrer le réseau de distribution 1 lors des pics de consommation. Cette modulation facilite également les flux d'énergie de pair à pair entre au moins deux utilisateurs 3.

Autre cas d'injection dans le réseau de distribution 1, une modulation peut correspondre à une commande d'injection de l'énergie électrique produite $E_{pi}$ par l'installation 30 d'au moins un utilisateur 3 vers le réseau de distribution 1.

Il est à noter qu'une modulation peut impliquer une combinaison de plusieurs de ces modulations pour un ou plusieurs utilisateurs 3.

A titre d'exemple, en cas de forte production d'énergie électrique au sein d'une installation 30 d'un utilisateur 3, la plateforme peut commander simultanément un stockage de l'énergie produite $E_{ps}$ au sein de l'installation 30, et en parallèle, une injection de l'énergie produite $E_{pi}$ dans le réseau de distribution 1.

Comme cela est illustré à la figure 3, lorsque la plateforme distante 6 pilote une modulation d'injection $E_{si}$ ou $E_{pi}$ depuis l'installation 30 d'un utilisateur créditeur vers le réseau de distribution 1, le procédé comporte une étape de détermination d'au moins un destinataire d'un flux d'énergie électrique. Ce flux d'énergie d'électrique provient d'au moins un utilisateur créditeur.

Le destinataire peut être un utilisateur débiteur soutirant de l'énergie électrique depuis le réseau de distribution 1 et/ou possédant une disponibilité de stockage d'énergie électrique pour un équipement accumulateur 32. Par exemple, lorsque l'énergie électrique disponible sur le réseau est supérieure au soutirage des utilisateurs 3, le procédé peut commander un stockage d'énergie électrique $E_{gs}$ issue du réseau de distribution 1 (voir figure 4).

Néanmoins, le destinataire peut également être un gestionnaire du réseau 10, 11 de distribution 1 d'énergie électrique. Dans ce cas, l'on priorise le service au réseau par rapport à un transfert de flux d'énergie électrique de pair à pair entre utilisateurs 3. Tout comme la détermination d'une modulation, la détermination d'au moins un destinataire d'un flux d'énergie électrique est réalisée sur la plateforme distante 6 en fonction d'au moins un paramètre prédéterminé. Ceci est rendu possible par la mise en relation des utilisateurs 3 et des gestionnaires réseaux 10 ,11 au travers d'un espace numérique dédié pour chaque utilisateur 3 sur l'interface utilisateur 8 et d'un espace numérique dédié pour chaque gestionnaire réseau 10, 11.

Selon l'invention, il est possible de distinguer deux types de paramètres d'influence d'une modulation telle qu'un transfert de flux d'énergie de pair à pair. Les paramètres de service au réseau de distribution 1 constituent un premier type de paramètre. Les paramètres de service au réseau de distribution 1 peuvent être choisi parmi la liste de paramètres suivants : le prix du kWh, la rémunération possible de l'utilisateur créditeur ou débiteur pour un service apporté au réseau de distribution 1, ou bien la résilience du réseau de distribution 1 face à une demande importante à un instant T.

En ce qui concerne le prix du kWh d'énergie électrique, à titre d'exemple, l'utilisateur créditeur peut paramétrer un montant seuil en dessous duquel son excédent d'énergie électrique n'est pas transféré au réseau de distribution 1.

L'inverse est aussi possible, l'utilisateur peut paramétrer un montant seuil au-dessus duquel son excédent d'énergie électrique est injecté sur le réseau de distribution 1.

D'un point de vue du gestionnaire réseau 10, 11, une rémunération supplémentaire peut être envisagée lorsqu'un utilisateur créditeur rend service au réseau de distribution 1 en injectant des excédents de production d'énergie électrique régulièrement.

Lors des épisodes de fortes consommations d'énergie électrique qui peuvent survenir par exemple en hiver dans les pays situés dans des zones tempérées, la résilience du réseau de distribution 1 peut être mise à rude épreuve. Dans ces conditions, il est possible de paramétrer une modulation d'injection d'énergie électrique depuis l'installation 30 d'un utilisateur 3 vers le réseau de distribution 1. Par exemple, comme illustré à la figure 4, le procédé 6 peut commander une injection d'énergie électrique $E_{si}$ depuis un équipement accumulateur 32 qui présente un taux de charge supérieure à un seuil déterminé. Cette disponibilité instantanée d'une quantité d'énergie électrique d'un utilisateur créditeur permet de contribuer à équilibrer le réseau de distribution 1 et de maintenir sa résilience face à un pic de consommation sur la globalité du réseau de distribution 1.

Il existe également des paramètres favorisant les transferts de flux d'énergie de pair à pair ou une autoconsommation. A titre indicatif, il est possible de citer plusieurs paramètres : le prix l'énergie électrique en kWh, la proximité géographique de la source de production d'énergie électrique, le type de production de l'énergie électrique tel qu'une production d'énergie éolienne, photovoltaïque ou hydraulique, le déplacement de l'énergie électrique stockée dans un accumulateur $E_{gs}$, le stockage de l'énergie électrique $E_{si}$ chez un utilisateur créditeur lorsque l'énergie électrique est produite momentanément en grande quantité, la nature et/ou l'état d'un équipement accumulateur 32 d'énergie électrique.

Comme pour les paramètres réseaux, un utilisateur créditeur peut choisir de transférer son excédent de production $E_{pi}$ vers un utilisateur débiteur selon un certain seuil de prix. L'inverse est également vrai, un utilisateur débiteur peut réaliser une transaction d'énergie électrique $E_{gc}$ au titre de sa consommation d'énergie électrique en provenance d'un ou plusieurs utilisateur(s) créditeur(s) si le prix de l'énergie électrique proposé est inférieur à un seuil déterminé.

L'utilisation d'un paramètre de type de production d'énergie électrique, contribue également à inciter l'utilisateur débiteur à réaliser des transactions énergétiques avec des utilisateurs créditeurs qui possèdent des équipements de production 31 d'énergie renouvelable.

Le paramètre de proximité géographique de provenance du flux d'énergie électrique, favorise les échanges de pair à pair locaux de type $E_{pi}$, Egc, $E_{gs}$, $E_{si}$. En utilisant de tels paramètres, l'utilisateur débiteur ou l'utilisateur créditeur s'inscrit dans une démarche écoresponsable. Il est à noter que les données de localisation de chaque utilisateur 3 peuvent être transmises à la plateforme distante 6 lors de l'étape de transmission des données mesurées ou implémentées initialement par l'utilisateur 3 lors de son inscription à la plateforme distante 6.

Il est également possible de paramétrer une transaction énergétique en fonction de la nature et/ou de l'état d'un équipement accumulateur 32 d'énergie électrique. La nature d'un équipement accumulateur 32 peut correspondre à la technologie de la batterie telle que Li-ION, un cumul d'eau chaude sanitaire, ou tout autre équipement qui permet d'accumuler de l'énergie électrique ou bien au caractère mobile de l'équipement accumulateur 32, une batterie de voiture électrique et un équipement accumulateur 32 mobile.

Un utilisateur débiteur peut aussi avoir des informations quant à l'état d'usure d'un équipement accumulateur 32 d'énergie électrique. Le taux de chargement de cet équipement accumulateur 32 est un autre paramètre qui peut être pris en compte pour réaliser un déplacement de l'énergie électrique $E_{si}$ qu'il stocke. Par exemple, il est possible de fixer un taux de chargement seuil en dessous duquel, l'énergie électrique stockée par l'équipement accumulateur 32 ne peut être déplacée vers le réseau de distribution 1 ou vers un autre utilisateur 3.

Lorsque le réseau de distribution 1 ne doit pas faire face à un pic de consommation, il est possible de paramétrer un stockage de l'énergie électrique $E_{ps}$ produite par l'utilisateur créditeur au sein de son installation électrique 30. Bien entendu, ce stockage nécessite que l'utilisateur créditeur possède au moins un équipement accumulateur 32. Si cet utilisateur créditeur ne possède pas d'équipement accumulateur 32 ou que ses capacités de stockage sont saturées, le procédé peut piloter une injection de l'énergie électrique produite $E_{pi}$ sur le réseau de distribution 1, le destinataire pouvant être le réseau de distribution 1 et/ou au moins un utilisateur débiteur.

Dans le même esprit, lorsque la production d'énergie électrique d'un utilisateur dépasse un seuil déterminé, il est possible de paramétrer un stockage d'une partie de cette production électrique au travers, d'une part, d'un injection $E_{pi}$ sur le réseau depuis l'installation 30 de l'utilisateur créditeur, et d'autre part, d'un soutirage $E_{gs}$ d'un utilisateur créditeur vers au moins un équipement accumulateur 32 appartenant à l'utilisateur créditeur ou une transaction énergétique vers un autre utilisateur 3.

Il est à noter que la plateforme distante 6 est paramétrable à plusieurs niveaux selon les paramètres que nous avons décrits. D'une part, le gestionnaire réseau 10, 11 peut fixer des règles de priorisation des paramètres que nous avons décrit pour favoriser le service au réseau de distribution 1. Ces paramètres de service au réseau de distribution 1 peuvent être définis par un gestionnaire réseau 10,11 au travers de l'interface gestionnaire 9. A ces fins, les paramètres de service au réseau seront priorisés par un algorithme permettant la répartition de l'énergie électrique disponible dans le réseau de distribution 1 et dans l'installation 30 de chaque utilisateur 3.

D'autre part, l'utilisateur 3 peut également fixer des règles de priorisation à son avantage. Par exemple pour favoriser une autoconsommation ou bien des transactions énergétiques de pair à pair. En ce sens, l'utilisateur débiteur peut se fournir en électricité auprès d'utilisateurs créditeurs en fonction de certains paramètres qui sont décrits précédemment. Ces paramètres d'autoconsommation et/ou de transaction de pair à pair peuvent être définis par chaque utilisateur 3 au travers de l'interface utilisateur 8.

Il est à noter qu'une modulation pilotée par le procédé peut conduire un changement de statut d'un utilisateur 3, l'utilisateur créditeur pouvant devenir utilisateur débiteur et vice versa. Cette situation peut être rencontrée dans le cas d'une modulation de service au réseau de distribution.1. Pour déterminer un état de modulation $\Omega$ d'un utilisateur créditeur et/ou d'un utilisateur débiteur, l'algorithme de répartition de la plateforme 6, prend en considération, les données d'énergie électrique produite Ep, les données d'énergie électrique consommées $E_c$, les données d'énergie électrique stockées Es, les données d'énergie électrique soutirées Eg, et les données d'énergie injectées Ei.

Avec

$$Ei = Esi + Ep$$

$$Esi = Es - (Esc + Eps)$$

$$Epi = Ep - (Epc + Eps)$$

$$Egc = Ec - (Epc + Esc)$$

$$Egs = Eg - Egc$$

Finalement, l'état de modulation $\Omega$ est déterminé selon la formule suivante :

$$\Omega = Esi + Ep - Eps - Ec + Esc - Egs$$

Si l'état de modulation $\Omega > 0$ l'installation de l'utilisateur dispose d'un potentiel d'injection Ei d'énergie électrique sur le réseau de distribution 1 ou de stockage d'énergie électrique Eps localement. Le statut de l'utilisateur est défini comme un utilisateur créditeur.

A l'inverse, si l'état de modulation $\Omega < 0$ l'utilisateur 3 subira une modulation de soutirage et aura le statut d'utilisateur débiteur.

Lorsque qu'une installation bénéficie de plusieurs équipement s de consommation 33, de production 31 et de stockage 32, on utilise la même formule en utilisant des sommes de flux d'énergie pour déterminer un état de modulation d'un utilisateur 3 :

$$\Omega = \sum_{a=1}^{n} Esi + \sum_{b=1}^{m} Ep - \sum_{a=1}^{n} \sum_{b=1}^{m} Eps - Ec + \sum_{a=1}^{n} Esc - \sum_{a=1}^{n} Egs$$

Dans cette équation a correspond à un équipement de stockage 32 alors que b correspond à un équipement de production 31.

En pratique, la plateforme comporte un algorithme de répartition de l'énergie disponible à un instant T. Cet algorithme est paramétrable selon au moins un paramètre qui peut être choisi parmi la liste des paramètres exposés et/ou selon une association d'au moins deux de ces paramètres.

L'algorithme utilise ces formules pour estimer les valeurs des transferts de flux d'énergie Esi, Egs, Eps, Epi, Epc, Esc, Egc. Ces valeurs sont estimées à l'aide des données connues Ec, Es, Ep et Ei/Eg.

Selon une première variante du procédé, la plateforme distante 6 fonctionne de façon autonome. Selon cette variante, la plateforme distante 6 détermine en temps réel, en fonction d'au moins un paramètre déterminé, au moins une modulation pour au moins un utilisateur créditeur ou pour au moins un utilisateur débiteur. Le paramètre ou les paramètres déterminé(s) peuvent être définis par un utilisateur qu'il ait le statut de débiteur ou le statut de créditeur. Néanmoins, le gestionnaire réseau 10, 11 peut également définir un ou plusieurs paramètres. En pratique, la plateforme distante 6 comporte un algorithme de répartition qui va déterminer les modulations telles que des transactions énergiques, c'est -à-dire, la provenance du flux d'énergie électrique et la destination préférentielle en fonction des différents paramètres fixés par les utilisateurs 3 et le gestionnaire réseau 10, 11.

Selon une seconde variante du procédé, la détermination d'une modulation de transaction énergétique peut être opérée par un utilisateur 3 et/ou le gestionnaire 10, 11 en fonction d'un ou de plusieurs paramètres choisis. En pratique, la plateforme distante 6 propose à un utilisateur débiteur des transactions énergétiques à partir d'un ou de plusieurs utilisateur(s) créditeur(s) qui correspondent aux paramètres que l'utilisateur débiteur a défini.

Comme illustré à la figure 3, le procédé de gestion selon l'invention peut comporter une étape de prévision à un instant T+n des données mesurées et du statut de chaque utilisateur 3. L'étape de prévision est notée i). Cette étape est opérée en fonction d'au moins un paramètre environnemental et de l'historique de consommation de chaque utilisateur.

A titre indicatif, l'on peut exposer une situation dans laquelle l'algorithme de la plateforme distante 6 va choisir d'allouer de l'énergie électrique stockée Es dans une batterie d'un véhicule pour opérer une transaction énergétique Esi vers un utilisateur débiteur. Prenons l'exemple d'un boulanger qui a besoin d'une grande quantité d'énergie à 3 heures du matin pour faire fonctionner son matériel de pétrissage de pâte. En parallèle, un utilisateur 3 potentiellement créditeur disposant d'un véhicule électrique dont la batterie est chargée à 80%. L'algorithme de la plateforme distante 5 peut ainsi choisir d'allouer l'énergie électrique stockée Es dans la batterie du véhicule au boulanger qui l'utilisera via le réseau distribution 1. Ceci en sachant, que la batterie du véhicule aura le temps de se recharger avant que l'utilisateur créditeur ait besoin d'utiliser son véhicule aux alentours de 8 heures du matin. La décision de mettre en oeuvre cette transaction énergétique $E_{si}$ s'appuie sur, d'une part, sur les habitudes de consommation électrique du boulanger, d'autre part, sur la disponibilité instantanée d'une quantité d'énergie électrique au sein de la batterie du véhicule électrique. En complément, il est possible de rajouter des paramètres tels que la proximité de la source d'énergie électrique, le prix, l'usure de la batterie et/ou son taux de rechargement etc. Ainsi, en fonction de l'étape de prévision, le procédé permet de déterminer une disponibilité future de l'énergie électrique d'un utilisateur créditeur pour équilibrer le réseau de distribution 1 via une modulation. La disponibilité future de l'énergie électrique peut être considérée comme un paramètre de détermination d'une modulation et/ou d'un destinataire d'un flux d'énergie électrique.

En fonction de l'étape de prédiction, le ou les algorithmes de la plateforme distante 5, définissent une modulation d'au moins un paramètre en vue de modifier l'état de modulation $\Omega$ d'au moins un utilisateur 3 pour l'instant T+n. En pratique, l'état de modulation $\Omega$ peut être modulé pour plusieurs utilisateurs 3 afin de répondre à un besoin de service du réseau de distribution 1 ou à un besoin de la communauté 4.

Le procédé comprend également une étape de transfert d'un flux d'énergie électrique. Cette étape est notée f). Le transfert de flux d'énergie électrique est opéré au travers du réseau de distribution 1 électrique. Le transfert de flux d'énergie électrique consiste à tracer une quantité d'énergie électrique depuis au moins un utilisateur créditeur vers au moins un destinataire sélectionné lors de l'étape précédente e) du procédé. Le destinataire du transfert flux d'énergie peut être un autre utilisateur 3 qualifié d'utilisateur débiteur et/ou le réseau de distribution 1.

Selon l'invention, le flux d'énergie électrique transféré est quantifié au moins par le compteur électrique 6 d'un utilisateur créditeur. En particulier, lors de cette étape de transfert, le flux d'énergie électrique est quantifié par une mesure de tension. Ici, la mesure de tension en opéré en voltampère (VA) par le compteur électrique 5 du gestionnaire créditeur. De plus, le procédé mesure également le volume d'énergie électrique par unité de temps du flux d'énergie électrique transitant au niveau du compteur électrique 5. La mesure de volume est également opérée par le compteur électrique 5 de l'utilisateur créditeur, cette mesure est opérée selon l'unité kWh.

Dans un premier temps, le module de communication 7 pilote une modulation de transfert d'une quantité d'énergie électrique pour un équipement de production 31 ou d'un équipement de stockage 32. Dans un second temps, le module de communication 7 collecte et enregistre en temps réel les données de volume et de tension mesurées par le compteur électrique 5 afin de permettre une traçabilité de la transaction énergétique. Avantageusement, il est possible de connaître l'origine de l'énergie électrique qui est transférée, son site de production et le type de production cela est particulièrement utile si l'on souhaite se fournir auprès d'un utilisateur créditeur qui produit de l'énergie électrique à partir des énergies renouvelables.

Lorsque le destinataire déterminé est le réseau de distribution 1, la quantification du flux énergétique est uniquement opéré au niveau du compteur électrique 5 de l'utilisateur créditeur. En revanche, lorsque le procédé effectue une transaction énergétique de pair à pair entre au moins deux utilisateurs, la quantification du flux énergétique est opérée au niveau de l'utilisateur créditeur mais aussi au niveau de l'utilisateur débiteur.

Il est à noter que dans le cadre d'une modulation d'injection d'énergie électrique stockée $E_{si}$ au sein d'un équipement accumulateur 32 vers le réseau de distribution 1, le compteur électrique 5 peut mesurer un flux d'énergie électrique sortant pendant une période déterminée ou bien une diminution du flux d'énergie électrique entrant pendant une durée déterminée. Une diminution signifie que l'équipement accumulateur 32 transfère sa charge dans l'installation 30 de l'utilisateur créditeur, ce qui entraine une diminution du flux d'énergie électrique Eg transitant par le compteur électrique 5 depuis le réseau de distribution 1.

Comme exposé précédemment, le procédé peut commander d'autres types de modulation. Une commande de modulation peut consister à réduire la consommation d'énergie électrique $E_c$. La réduction de la consommation en énergie électrique d'un utilisateur 3, correspond à une modulation dite « d'effacement de consommation électrique ». Pour cela le procédé peut commander l'arrêt ou la diminution du fonctionnement des équipements de consommation 33 qui sont connectés au module de communication 7 de l'utilisateur 3. A titre informatif, il est possible de réduire la puissance de fonctionnement d'une pompe chaleur en journée ou la nuit.

En fonction des commandes disponibles au niveau de chaque équipement de consommation 33, il est possible de piloter ces équipements de manière précise en termes de puissance, consommation et calendrier. Il est ainsi possible de diminuer la consommation d'énergie électrique de chaque utilisateur 3.

Comme nous venons de le décrire, la modulation peut être pilotée automatiquement par l'algorithme de gestion de consommation. Dans le cadre d'un pilotage automatique, l'étape de modulation peut être opérée à la suite d'une étape de prédiction de la consommation d'un utilisateur 3. Dans ce cas, l'algorithme de modulation éteint ou diminue la consommation d'équipement de consommation 33 selon l'historique de consommation. Par exemple, un pic de consommation due au rechargement d'un véhicule électrique en fin de journée et en heure pleine, peut conduire l'algorithme de modulation à éteindre la borne de chargement entre 20h et 23h30 cette heure pouvant correspondre au début des heures creuses. Une telle modulation permet d'équilibrer le réseau de distribution 1.

Cependant, il est aussi possible que l'algorithme suggère à l'utilisateur 3 de faire des opérations de modulation de consommations $E_c$ Par exemple, l'algorithme peut suggérer de lancer certains appareils électroménagers tels qu'un lave-linge ou un lave-vaisselle durant les heures creuses ou le tarif de l'énergie électrique est plus bas ou bien car un surplus d'énergie est disponible au sein du groupe de utilisateurs 4. En pratique, l'utilisateur 3 interagit avec la plateforme au travers de l'interface utilisateur 8 via un terminal numérique connecté. Au travers de l'interface utilisateur 8, il est aussi possible de programmer le déclenchement de certains équipements de consommation 33 dans des plages horaires précises. Tout ceci, tend l'utilisateur à aller vers une démarche de consommation d'énergie électrique optimisée que l'on peut aussi qualifier d'écoresponsable.

Un grand nombre d'équipement de consommation 33 sont connectables au module de communication 7. A titre indicatif, il est possible de citer les batteries et les bornes de rechargement et les véhicules électriques, ou bien les chauffages, producteurs d'eau chaude sanitaire, équipements électroménagers, pompes (liste non-exhaustive). Cette connexion au module de communication 7 rend ces équipements pilotables grâce à leurs interfaces et protocoles de communication intégrés. Il est à noter que les équipements électroménagers de dernière génération sont également équipés d'interfaces et de protocoles de communication.

De manière alternative, il est possible de connecter une interface de pilotage domotique au module de communication 7. L'interface domotique permet alors de piloter le fonctionnement des équipements qu'elle contrôle.

En ce qui concerne, les anciens équipements de consommation 33 qui ne comportent pas d'interface ni de protocoles de communication, il est possible de les relier au module de communication 7. A cet effet, le système selon l'invention peut comprendre un ou plusieurs relais qui sont intégrés au tableau électrique d'installation 30 d'un utilisateur 3. Ce relais peut également être intégré sous forme de prise communicante et pilotable. Chaque relais est relié au module de communication 7 de l'utilisateur 3. De fait, chaque relais est pilotable par la plateforme distante 6 au travers du module de communication 7. En pratique, la commande de ces équipements est basique elle consiste à allumer ou éteindre l'équipement de consommation 33 en fonction du pilotage des algorithmes de modulation de la plateforme distante 6. Ces relais possèdent également une interface de communication et fonctionnent avec différents protocoles de communication permettant leur pilotage et la collecte de données de consommation $E_c$ par le module de communication 7.

Le procédé selon l'invention peut également interagir avec un compte électrique 5 intelligent comme le compteur « Linky ® » installé depuis peu en France. L'interaction est opérée à l'aide du module de communication 7 et de l'interface de communication TIC décrit précédemment.

Il est ainsi possible d'agir sur les contacts secs du compteur électrique 5. Le contact sec est un interrupteur qui permet d'allumer ou d'éteindre un équipement de consommation 33 branché sur un fusible et/ou d'éteindre et d'allumer un automatiquement un équipement de consommation 33.

L'étape de modulation contribue à réduire la consommation d'énergie électrique de chaque utilisateur 3 du réseau de distribution 1. Mais aussi de favoriser l'autoconsommation en priorisant le transfert de flux d'énergie $E_{pc}$ par rapport au à l'injection réseau de type $E_{pi}$ par exemple (voir figure 4). De la même façon, en réduisant la consommation $E_c$ d'un utilisateur créditeur, cela permet de diminuer l'énergie soutirée Eg et Egc et favorise un équilibre du réseau de distribution 1 par exemple lors des pics de consommation. Ainsi, le système et le procédé selon l'invention permettent de gérer et de moduler la consommation d'un réseau de distribution à deux niveaux. D'une part, le système gère, à un premier niveau, au travers du module de communication 7 la consommation de l'installation 30 de chaque utilisateur 3, et d'autre part, le système gère globalement la consommation du réseau de distribution en favorisant les apports au réseau depuis les utilisateurs créditeurs, et/ou par transfert de l'énergie électrique de pair à pair entre au moins deux utilisateurs 3.

Tout ceci contribue à la réduction de la consommation générale du réseau mais aussi à sa résilience face à des pics de consommations.

'En complément, le procédé peut comporter une étape de transmission, au travers d'un réseau de communication, des données de transfert de flux d'énergie électrique depuis la plateforme distant 6 vers le gestionnaire réseau 10, 11, ceci en vue d'opérer une transaction financière. En pratique, les données d'une transaction énergétique sont transmises depuis la plateforme distante 6 vers un gestionnaire réseau 10, 11. Le gestionnaire réseau établit alors une transaction financière en fonction de la quantité de flux d'énergie transmise vers le réseau de distribution 1 et de la tarification de cette transaction. Dans le cas d'un utilisateur créditeur qui subvient à sa consommation personnelle et apporte des services au réseau, le gestionnaire 10, 11 pourra alors rétribuer cette utilisateur 3.

Il est à noter que les transactions financières en relation avec des transactions énergétiques de pair à pair peuvent être gérées par le gestionnaire réseau 10, 11 ou par un système de transaction financière intégré directement à la plateforme distante 6.

## Revendications

1. Procédé de gestion des ressources d'énergie électrique au sein d'un réseau de distribution (1) électrique qui est géré par au moins un gestionnaire réseau (10, 11), le procédé comprenant :

   a) une étape de mesure à un instant T, d'une part, de données de flux d'énergie électrique transitant par un compteur électrique (5) d'une installation (30) électrique d'au moins un utilisateur (3), le compteur électrique (5) étant connecté au réseau de distribution électrique (1) et à l'installation électrique (30) de l'utilisateur (3), et d'autre part, de données d'énergie électrique de consommation $E_c$ de l'installation (30) électrique de l'utilisateur (3), de données d'énergie électrique stockée $E_s$ au sein de l'installation (30) électrique de l'utilisateur (3), de données d'énergie électrique produite $E_p$ par au moins un équipement de production (31) de l'installation (30) de l'utilisateur (3) ;
   b) une étape de qualification d'un statut de l'utilisateur (3) à un instant T, lorsque le flux d'énergie électrique transitant par le compteur électrique (5) est supérieur à 0, l'utilisateur (3) injecte de l'énergie électrique sur le réseau de distribution (1), l'utilisateur (3) est alors défini en tant qu'utilisateur créditeur, à l'inverse, lorsque le flux d'énergie électrique transitant par le compteur électrique (5) est inférieur à 0, l'utilisateur (3) soutire de l'énergie électrique depuis le réseau de distribution (1), l'utilisateur (3) est alors défini en tant qu'utilisateur débiteur ;
   c) une étape de transmission de données mesurées à un instant T vers une plateforme distante (6), des données mesurées à instant T d'au moins un utilisateur créditeur et/ou des données mesurées à un instant T d'au moins un utilisateur débiteur étant transmises vers la plateforme distante (6) au travers d'un réseau de télécommunication, les données mesurées sont enregistrées au sein de la plateforme distante (6) ;
   d) une étape de mise en relation d'au moins un utilisateur créditeur avec au moins un utilisateur débiteur et/ou le gestionnaire du réseau (10, 11), l'étape de mise en relation étant opérée au sein de la plateforme distante (6) ;
   e) une étape de détermination d'au moins une modulation pour au moins un utilisateur créditeur et/ou d'au moins un utilisateur débiteur, une modulation visant à moduler la consommation d'énergie électrique d'une installation (30) d'au moins un utilisateur (3) et/ou du réseau de distribution (1), cette modulation étant déterminée par la plateforme distante (6), d'une part, en fonction des données de production d'énergie électrique $E_p$ de chaque utilisateur (3), des données de consommation d'énergie électrique $E_c$ de chaque utilisateur (3), des données de stockage $E_s$ d'énergie électrique de chaque utilisateur (3), et d'autre part, en fonction d'au moins un paramètre prédéterminé de répartition des énergies électriques disponibles à l'instant T;
   f) une étape de modulation de la consommation d'au moins un utilisateur créditeur et/ou d'au moins un utilisateur débiteur, l'étape de modulation étant opérée au niveau de l'installation (30) d'un utilisateur (3), la modulation correspondant: à une commande de baisse de la consommation d'énergie électrique de l'installation (30) d'au moins un utilisateur (3), à un stockage d'énergie électrique issue de la production d'énergie électrique $E_{ps}$ de l'installation (30) d'au moins un utilisateur (3), à une commande de stockage d'énergie électrique $E_{gs}$ issue du réseau de distribution (1), à une commande d'injection de l'énergie électrique stockée $E_{si}$ au sein de l'installation (30) d'au moins un utilisateur (3) vers le réseau distribution (1), à une commande d'injection de l'énergie électrique produite $E_{pi}$ par l'installation (30) d'au moins un utilisateur (3) vers le réseau de distribution (1), ou à une commande d'une combinaison de plusieurs de ces modulations pour un ou plusieurs utilisateurs (3), la plateforme distante (6) pilotant des modulations pour tous les utilisateurs (3).

2. Procédé de gestion selon la revendication 1, **caractérisé en ce que**, lorsque la plateforme distante (6) pilote une modulation d'injection de l'énergie électrique stockée $E_{si}$ au sein de l'installation (30) d'au moins un utilisateur créditeur vers le réseau distribution (1), ou une injection de l'énergie électrique produite $E_{pi}$ par l'installation (30) vers le réseau de distribution (1), le procédé comporte :

g) une étape de détermination d'au moins un destinataire d'un flux d'énergie électrique provenant d'au moins un utilisateur créditeur, le au moins un destinataire étant un utilisateur débiteur et/ou un gestionnaire (10, 11) du réseau de distribution (1) d'énergie électrique, l'étape de détermination est réalisée sur la plateforme distante (6) en fonction d'au moins un paramètre prédéterminé de répartition de l'énergie électrique ;

h) une étape de transfert d'un flux d'énergie électrique, via le réseau de distribution (1) électrique, depuis au moins un utilisateur créditeur vers au moins un destinataire déterminé, le flux d'énergie électrique transféré étant quantifié au moins par le compteur électrique (5) de le au moins un utilisateur créditeur.

3. Procédé de gestion selon la revendication 2, **caractérisé en ce que**, lors de l'étape de transfert, le flux d'énergie électrique est quantifié par une mesure de tension et de volume par unité de temps du flux d'énergie électrique transitant au niveau d'un compteur électrique (5) d'au moins un utilisateur créditeur et/ou au niveau d'un compteur d'un utilisateur débiteur.

4. Procédé de gestion selon l'une des revendications 2 et 3, **caractérisé en ce que**, lors de l'étape h) le flux d'énergie électrique est quantifié par :

- une mesure de flux d'énergie électrique sortant au niveau du compteur électrique (5) d'au moins un utilisateur créditeur, et/ou
- une mesure de flux d'énergie électrique entrant au niveau du compteur électrique (5) de l'utilisateur débiteur.

5. Procédé de gestion selon l'une des revendications 1 à 4, **caractérisé en ce que** la plateforme distante (6) fonctionne de façon autonome et détermine en temps réel, en fonction d'au moins un paramètre déterminé, le destinataire d'un flux d'énergie électrique fournit par au moins un utilisateur créditeur, le paramètre déterminé étant définit par l'utilisateur débiteur et/ou par le gestionnaire réseau.

6. Procédé de gestion selon les revendications 1 et 2, les étapes a), b), c), e) et h) étant opérées par un module de communication (7) qui est connecté :

- à des équipements de production (31) et/ou de stockage (32) d'énergie électrique,
- au compteur électrique (5) d'un utilisateur (3), et
- à la plateforme distante (6) au travers d'un réseau de télécommunication.

7. Procédé de gestion selon la revendication 6, le module de communication collectant, stockant et traitant en local, d'une part, les données de flux d'énergie électrique transitant par le compteur électrique (5), et d'autre part, des données de production d'énergie électrique $E_p$ des équipements de production (31), des données de stockage $E_s$ des équipements accumulateurs (32) d'énergie électrique stockée, et des données de consommation $E_c$ des équipements de consommation (33) d'énergie électrique.

8. Procédé de gestion selon la revendication 7, **caractérisé en ce que** l'étape de modulation pilote le taux de fonctionnement ou l'extinction des équipements de consommation (33) qui sont reliés au module de communication (7), cette étape est opérée, via le module de communication (7), depuis la plateforme distante (6).

9. Procédé de gestion selon l'une des revendications 1 à 8, **caractérisé en ce que** les étapes a), b), c) sont répétées en continu de sorte à transmettre en temps réel à la plateforme distante (6) les données mesurées de chaque utilisateur (3).

10. Procédé de gestion selon l'une des revendications 1 à 9, **caractérisé en ce que** la plateforme distante (6) est paramétrable pour déterminer une modulation pour au moins un utilisateur débiteur et/ou pour au moins un utilisateur créditeur, la plateforme distante (6) étant paramétrable selon au moins un paramètre peut être choisi parmi la liste suivante :

- prix de l'énergie électrique,
- proximité géographique entre deux utilisateurs (3) de provenance de l'énergie électrique, les données de localisation de chaque utilisateur (3) étant transmises à la plateforme distante (6),
- type de production électrique de l'énergie électrique tel qu'une production d'énergie éolienne, photovoltaïque, hydraulique,
- disponibilité instantanée de l'énergie électrique d'un utilisateur créditeur pour équilibrer le réseau de distribution (1),
- déplacement de l'énergie électrique stockée dans un équipement accumulateur (32) d'énergie électrique vers un équipement de consommation (33),
- stockage de l'énergie électrique dans un équipement accumulateur (32) d'un utilisateur créditeur lorsque l'énergie électrique est produite en grande quantité à un instant T,
- nature et/ou l'état d'un équipement accumulateur (32) d'énergie électrique ,
- disponibilité d'une capacité de modulation instantanée d'un utilisateur débiteur (3) ou d'un utilisateur créditeur (3) pour équilibrer le réseau de distribution (1),

et/ou une association d'au moins deux de ces paramètres.

11. Procédé de gestion selon l'une des revendications 1 à 10, **caractérisé en ce qu'**il comporte une étape de transmission, au travers d'un réseau de communication, des données de transfert de flux d'énergie électrique depuis la plateforme distant (6) vers le gestionnaire réseau (10, 11), ceci en vue d'opérer une transaction financière.

12. Procédé de gestion selon l'une des revendications 1 à 11, **caractérisé en ce que** les données mesurées pour chaque utilisateur (3) sont classifiées et répertoriées chronologiquement en vue de créer un historique de consommation pour chaque utilisateur (3).

13. Procédé de gestion selon la revendication 12, **caractérisé en ce qu'**il comporte une étape de prévision i) à un instant T+n des données mesurées et du statut de chaque utilisateur (3), cette étape est opérée en fonction d'au moins un paramètre environnemental et de l'historique de consommation de chaque utilisateur (3).

14. Procédé de gestion selon la revendication 13, **caractérisé en ce que**, en fonction de l'étape de prévision i), le procédé comprend les opérations suivantes :

- déterminer une disponibilité future de l'énergie électrique d'un utilisateur créditeur pour équilibrer le réseau de distribution (1), la disponibilité future étant un paramètre de détermination du destinataire d'un flux d'énergie électrique, et/ou
- planifier une étape de modulation de la consommation d'un utilisateur (3) pour équilibrer le réseaux de distribution (1).

15. Système de gestion de ressources d'énergie électrique (2) au sein d'un réseau de distribution (1) électrique, le système mettant en oeuvre le procédé défini selon l'une des revendications 1 à 14, ce système comprenant :

- au moins un gestionnaire réseau (10, 11) qui assure les transferts de flux d'énergie électrique au sein du réseau de distribution (1),
- une communauté (4) d'utilisateurs (3) qui sont connectés, au travers d'un compteur électrique (5) individuel, à un même réseau de distribution (1) électrique, chaque utilisateur (3) comprenant une installation électrique (30), le compteur électrique (5) mesurant les flux d'énergie électrique qui transitent entre le réseau de distribution (1) électrique et l'installation électrique (30) de l'utilisateur (3),
- une plateforme distante (6) qui assure, d'une part, une mise en relation des utilisateurs (3) entre eux et/ou des utilisateurs (3) avec le gestionnaire réseau (10, 11) via des interfaces dédiés (8), d'autre part, des opérations de transfert de flux d'énergie entre au moins un utilisateur (3) et le gestionnaire réseau (10, 11) et/ou entre au moins deux utilisateurs (3) et qui assure les opérations de modulation en vue de répondre une demande faite par le gestionnaire de réseau (10,11) pour une optimisation de celui-ci ou une demande faite par la communauté (4) d'utilisateurs pour une optimisation de l'énergie disponible pour celle-ci
- un module de communication (7) qui équipe chaque utilisateur (3), le module de communication (7) étant connecté, au compteur électrique (5) d'un utilisateur (3), à la plateforme distante (6) au travers d'un réseau de télécommunication, et à au moins un équipement producteur (31) et/ou un équipement accumulateur (32) d'énergie électrique mais aussi à au moins un équipement aux équipements de consommation (33).

[Fig. 1]

[Fig. 2]

[Fig. 3]

EP 3 975 103 A1

Mesure de flux d'énergie électrique transitant, à un instant T dans l'installation électrique d'au moins un utilisateur du réseau de distribution — a

Si le flux d'énergie électrique >0 au niveau du compteur électrique de l'installation, L'utilisateur est qualifié comme un utilisateur créditeur à instant T — b

Si le flux d'énergie électrique < 0 au niveau du compteur électrique de l'installation, L'utilisateur est qualifié comme un utilisateur débiteur à instant T

Transmission des données mesurées de chaque utilisateur vers une plateforme distante — c

Enregistrement des données mesurées par une classification chronologique

Prédiction du statut d'au moins un utilisateur à un instant T+n — i

Mise en relation d'un utilisateur créditeur avec un utilisateur débiteur
Ou
Mise en relation entre un utilisateur créditeur et un gestionnaire réseau — d

Détermination au moins une modulation pour au moins un utilisateur créditeur et/ou au moins un utilisateur débiteur, cette modulation étant déterminée par la plateforme distante en fonction des flux d'énergie mesurés à l'instant T et d'au moins un paramètre prédéterminé de répartition des énergies électriques disponibles à l'instant T ; — e

Transfert d'un flux d'énergie électrique depuis un utilisateur créditeur vers le ou les destinataires déterminé(s) — h

La plateforme pilote au moins une modulation de consommation d'un au moins un utilisateur créditeur et/ou d'au moins un utilisateur débiteur — f

Détermination d'un destinataire d'un flux d'énergie électrique provenant d'un utilisateur créditeur, le destinataire étant un gestionnaire réseau et/ou un utilisateur débiteur — g

19

[Fig. 4]

**EP 3 975 103 A1**

Europäisches
Patentamt
European
Patent Office
Office européen
des brevets

# RAPPORT DE RECHERCHE EUROPEENNE

Numéro de la demande

**EP 21 19 7843**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/144414 A1 (LEE JA-CHIN AUDREY [US] ET AL) 24 mai 2018 (2018-05-24) | 1,2,5-15 | INV. G06Q50/06 |
| A | * figures 1,3,5,6,9 * | 3,4 | H02J3/00 |
| | * alinéa [0040] - alinéa [0048] * | | H02J3/14 |
| | * alinéa [0050] - alinéa [0052] * | | H02J3/28 |
| | * alinéa [0067] - alinéa [0068] * | | H02J13/00 |
| | * alinéa [0073] - alinéa [0076] * | | |
| | * alinéa [0078] - alinéa [0082] * | | |
| | * alinéa [0084] - alinéa [0090] * | | |
| | * alinéa [0094] - alinéa [0124] * | | |
| | * alinéa [0194] - alinéa [0197] * | | |
| | ----- | | |
| X | FR 3 090 227 A1 (DIMENSIONS [FR]) 19 juin 2020 (2020-06-19) | 1-4,6-8, 15 | |
| A | * alinéa [0013] - alinéa [0028] * | 5,9-14 | |
| | * alinéa [0032] * | | |
| | * alinéa [0039] - alinéa [0055] * | | |
| | * alinéa [0060] * | | |
| | * alinéa [0074] - alinéa [0082] * | | |
| | ----- | | |
| A | FR 3 060 890 A1 (ELECTRICITE DE FRANCE [FR]) 22 juin 2018 (2018-06-22) * le document en entier * | 1-15 | DOMAINES TECHNIQUES RECHERCHES (IPC) G06Q H02J |
| | ----- | | |

Le présent rapport a été établi pour toutes les revendications

| Lieu de la recherche | Date d'achèvement de la recherche | Examinateur |
|---|---|---|
| La Haye | 7 février 2022 | Beker, Sergio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................
& : membre de la même famille, document correspondant

EPO FORM 1503 03.82 (P04C02)

21

# EP 3 975 103 A1

## ANNEXE AU RAPPORT DE RECHERCHE EUROPEENNE
## RELATIF A LA DEMANDE DE BREVET EUROPEEN NO.

EP 21 19 7843

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2022

| Document brevet cité au rapport de recherche | Date de publication | Membre(s) de la famille de brevet(s) | Date de publication |
|---|---|---|---|
| US 2018144414 A1 | 24-05-2018 | AU 2017364328 A1 | 11-07-2019 |
| | | BR 112019010630 A2 | 01-10-2019 |
| | | GB 2571883 A | 11-09-2019 |
| | | US 9645596 B1 | 09-05-2017 |
| | | US 2018144414 A1 | 24-05-2018 |
| | | WO 2018096424 A1 | 31-05-2018 |
| FR 3090227 A1 | 19-06-2020 | AUCUN | |
| FR 3060890 A1 | 22-06-2018 | CA 3047648 A1 | 28-06-2018 |
| | | EP 3555991 A1 | 23-10-2019 |
| | | FR 3060890 A1 | 22-06-2018 |
| | | JP 2020502982 A | 23-01-2020 |
| | | US 2019393721 A1 | 26-12-2019 |
| | | WO 2018114936 A1 | 28-06-2018 |

EPO FORM P0460

Pour tout renseignement concernant cette annexe : voir Journal Officiel de l'Office européen des brevets, No.12/82